# FASCICULE DE BREVET EUROPEEN

(11) **EP 0 807 934 B1**
(45) Date de publication et mention de la délivrance du brevet: **21.02.2007**
(21) Numéro de dépôt: 97870066.4
(22) Date de dépôt: 07.05.1997
(51) Int. Cl.: G11B 33/14

(54) **Moyens de protection pour dispositif de lecture et/ou d'enregistrement**
Verfahren zum Schützen von Schreib- und/oder Lesevorrichtung
Means for protecting reading and/or writing device

(30) Priorité: 15.05.1996 BE 9600442
(43) Date de publication de la demande: 19.11.1997
(73) Titulaire: STAAR SOCIETE ANONYME, B-1200 Bruxelles (BE)
(72) Inventeur: d'Alayer de Costemore d'Arc Stéphane, Marie André, 1474 Ways (BE)
(74) Mandataire: Overath, Philippe

(56) Documents cités:
- US-A- 5 268 890
- US-A- 5 297 122
- PATENT ABSTRACTS OF JAPAN vol. 012, no. 408 (P-778), 28 Octobre 1988 & JP 63 146235 A (CANON INC), 18 Juin 1988,
- PATENT ABSTRACTS OF JAPAN vol. 017, no. 536 (P-1620), 27 Septembre 1993 & JP 05 144058 A (HITACHI LTD;OTHERS: 01), 11 Juin 1993,
- PATENT ABSTRACTS OF JAPAN vol. 013, no. 070 (P-829), 17 Février 1989 & JP 63 255839 A (MATSUSHITA GRAPHIC COMMUN SYST INC), 24 Octobre 1988,
- PATENT ABSTRACTS OF JAPAN vol. 013, no. 054 (P-824), 8 Février 1989 & JP 63 244477 A (TOSHIBA CORP), 11 Octobre 1988,
- PATENT ABSTRACTS OF JAPAN vol. 011, no. 144 (P-574), 12 Mai 1987 & JP 61 280043 A (NEC ENG LTD), 10 Décembre 1986,
- PATENT ABSTRACTS OF JAPAN vol. 005, no. 073 (P-061), 15 Mai 1981 & JP 56 022228 A (MATSUSHITA ELECTRIC IND CO LTD), 2 Mars 1981,
- PATENT ABSTRACTS OF JAPAN vol. 011, no. 084 (P-556), 13 Mars 1987 & JP 61 237236 A (CANON INC), 22 Octobre 1986,
- PATENT ABSTRACTS OF JAPAN vol. 013, no. 054 (P-824), 8 Février 1989 & JP 63 244467 A (TOSHIBA CORP), 11 Octobre 1988,

## Description

La présente invention se rapporte aux dispositifs de lecture et/ou d'enregistrement tant par voie optique que magnétique,... d'informations tant analogiques que numériques, sur un support tel un disque, une bande, une carte, etc... et concerne des moyens assurant leur protection contre le dépôt de particules étrangères.

Les améliorations constamment réalisées dans le domaine des supports d'informations et celui des dispositifs de lecture et d'enregistrement, communément appelés têtes, permettent de doubler la densité des informations environ tous les 3 ou 4 ans, donc de rendre les appareils plus compacts en mettant en oeuvre des têtes de plus en plus petites. De ce fait, les particules étrangères telles que poussières, impuretés, vapeurs, humidité dont la taille reste sensiblement la même, risquent, par dépôt sur ces têtes, d'en diminuer sensiblement les performances, voire de les obturer, ce qui occasionne des erreurs de lecture ou d'enregistrement d'informations.

Pour remédier à ces problèmes, on a proposé des systèmes de nettoyage des têtes de lecture et/ou d'enregistrement, tel celui décrit dans le brevet américain 5.170.304, activés temporairement à la mise sous tension de l'appareil. Cependant ces systèmes sont peu satisfaisants car étant internes à l'appareil, leur remplacement ou entretien régulier est pratiquement impossible. En outre, ils n'empêchent pas le dépôt de particules.

On a proposé, dans le brevet américain 4.519.059 de la demanderesse, des moyens masquant la tête optique mais ceci a lieu uniquement durant le nettoyage du support d'informations.

La demande japonaise 51-111500 propose un obturateur mû par un électro-aimant pour protéger le support d'informations d'une exposition prolongée à la lumière d'un laser en l'absence d'enregistrement. Un système similaire est décrit dans la demande japonaise 63-146235. Mais le montage d'un électro-aimant est très peu recommandable à proximité d'une tête optique ou magnétique à cause des champs magnétiques qu'il crée tandis qu'un blindage de la tête est irréaliste car onéreux et alourdirait l'équipage mobile qui doit rester le plus léger possible. De plus, ces obturateurs n'ont pas de position stable lors de la lecture et/ou l'enregistrement, ce qui nécessite d'alimenter en permanence l'électro-aimant.

La demande de brevet allemand DE 195 23 785, le brevet américain 5.297.122 qui reflète le préambule de la revendication 1 proposent des systèmes mécaniques masquant les têtes de lecture mais ils sont encombrants et nécessitent pour leur actionnement respectivement le retour des têtes à une position déterminée (le sillon initial du disque), l'éjection du support d'informations ce qui est très peu souple et interdit toute reprise instantanée de la lecture ou de l'enregistrement à l'endroit de son interruption. En outre, l'éjection du support ou retour de la tête à une position déterminée ne peut être assuré pour des appareils montés dans des véhicules car la clé de contact, en coupant instantanément l'alimentation, interdit tout mouvement.

Le document JP 05 144058 met en oeuvre une protection transparente permanente au-dessus d'une lentille, protection nettoyée uniquement lorsque la lentille vient buter contre le support d'un moteur.

Le document JP 63 255839 dévoile une protection coopérant avec une came fixe pour la rendre opérative en fins de course, inopérative entre ces fins de course.

Le document JP 56 022228 dévoile un électro-aimant assurant le pivotement d'un obturateur protégeant une lentille lorsqu'elle est dans une position spécifique.

Le but de la présente invention est donc de remédier aux inconvénients précités en proposant des moyens de protection simples, efficaces, actionnables à tout moment et ne nécessitant pas l'accomplissement préalable d'une phase particulière.

Un second but est de proposer des moyens permettant de reprendre la lecture et/ou l'enregistrement d'informations pratiquement instantanément à l'endroit où elle a été interrompue, et ce, dès le rétablissement de l'opération ou de l'alimentation.

Un autre but de la présente invention est de proposer des moyens peu coûteux pour ne pas grever le prix des appareils auxquels ils sont incorporés.

Un autre but de l'invention est de proposer des moyens aisément adaptables à tout type d'appareil : pour maisons, voitures, portables, portatifs....

Un autre but de l'invention est de proposer des moyens nécessitant très peu d'énergie pour épargner la source d'énergie (piles, accumulateurs,...) des appareils portables, portatifs.

Un autre but est de proposer des moyens très stables tant en position active qu'inactive.

En vue de la réalisation de ces buts, les moyens objets de la présente invention sont essentiellement caractérisés par le contenu de la revendication principale.

Divers avantages, caractéristiques, particularités, ressortiront de la description détaillée, donnée ci-dessous à titre non limitatif, de deux modes de réalisation préférés auxquels des améliorations peuvent être apportées sans pour autant sortir du cadre de l'invention et pour lesquels :
- la figure 1 est une vue de face d'un premier mode de réalisation, les moyens de protection étant en position inactive,
- la figure 2 est une vue de côté des éléments apparaissant à la figure 1,
- la figure 3 est une vue de dessus des éléments de la figure 1, les moyens de protection étant actifs,
- la figure 4 est une vue de dessus partielle d'un second mode de réalisation, les moyens de protection étant inactifs,
- la figure 5 est une vue de détail à plus grande échelle d'éléments de la figure 4,
- la figure 6 est semblable à la figure 5, les moyens de protection étant actifs,

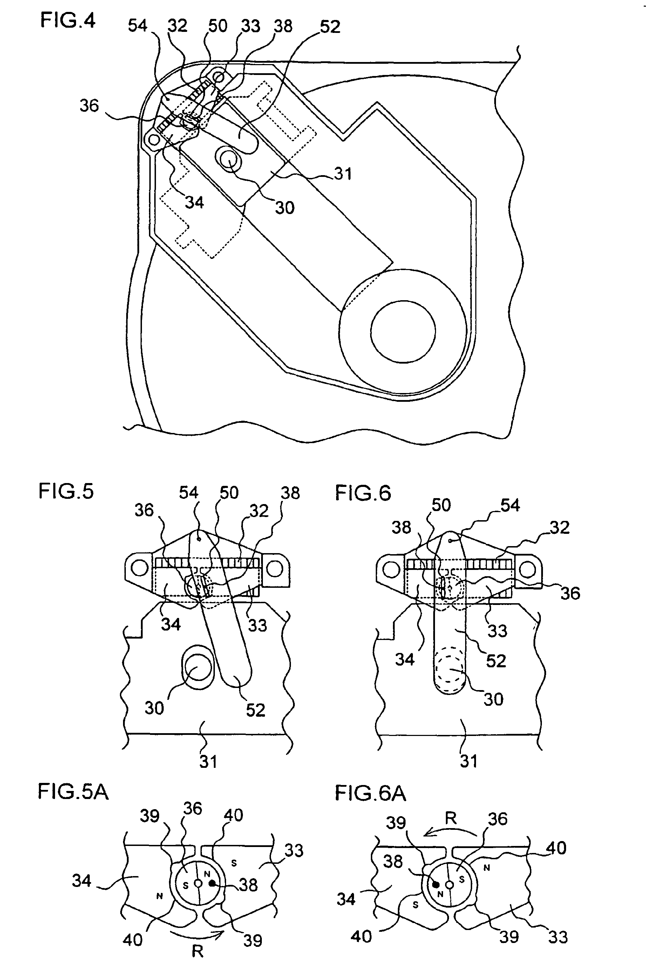

- les figures 5A et 6A représentent un détail particulier des figures 5 et 6 à plus grande échelle.
- la figure 7 est un diagramme électrique schématique d'un appareil équipé des moyens de protection.

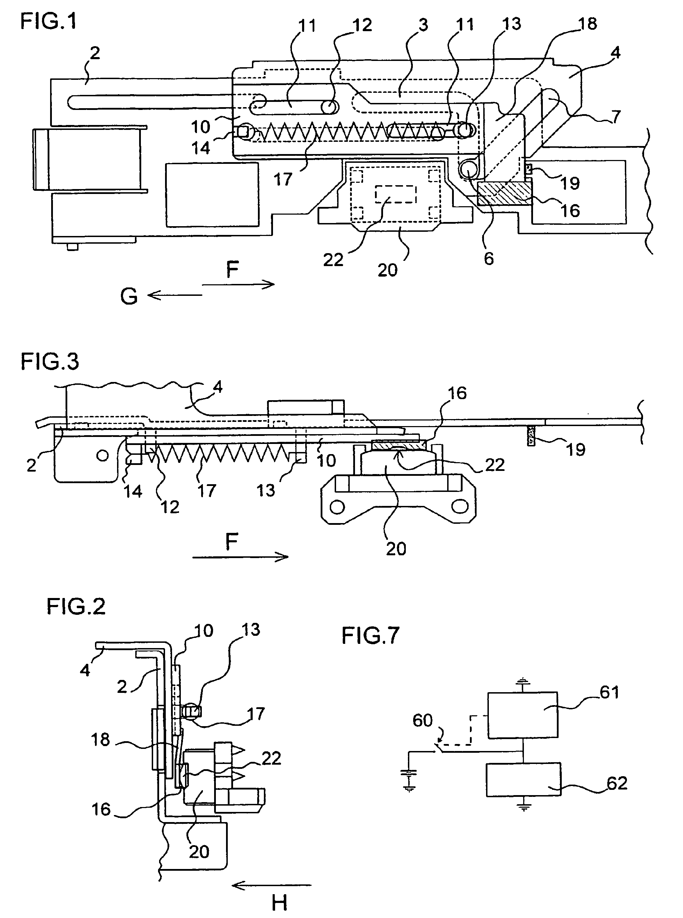

Les figures 1 à 3 et 7 concernent un appareil à cassettes tel que décrit dans les brevets belges 891.045 et 94 00149 de la demanderesse où la lecture/ l'enregistrement d'informations se fait après application de la tête magnétique sur le support qui est une bande magnétique.

Comme le montrent ces figures, un montant latéral fixe 2 de l'appareil situé à proximité de la tête magnétique 20 supporte une glissière 4 du mécanisme de transfert (non représenté) assurant le mouvement relatif entre la tête 20 et le support d'informations pour leur mise en position opérative, respectivement inopérative. Cette glissière 4 est translatée (flèches F, G) pour guider un téton 6 du logement recevant la cassette par déplacement simultané au travers de la fente 3 en forme de L pratiquée dans le montant 2 et la fente inclinée 7 de la glissière 4.

Conformément à l'invention, une coulisse 10 munie de deux fentes horizontales 11 laissant passer deux tétons 12, 13 fixés sur la glissière 4, s'appuie sur et est guidée par la surface externe de ladite glissière 4 ; un pli 14 formé sur son bord gauche sert d'ancrage à un ressort 17 dont l'autre extrémité est fixée au téton 13, tandis que sur son bord droit la coulisse 10 porte à l'aide d'une lamelle flexible 18 un obturateur 16 ayant sensiblement la taille de l'élément actif 22 de la tête 20. Cette lamelle 18 est de préférence élastique pour maintenir en position opérative l'obturateur 16 contre la tête 20.

En l'absence de cassette ou lorsque l'appareil est inopératif, tous les éléments précités sont dans la position représentée à la figure 3, la tête 20 est écartée du support magnétique tandis que les tétons 12, 13 et le ressort 17 maintiennent de façon stable la coulisse 10 à l'encontre de tout déplacement, l'obturateur 16 recouvrant l'élément actif 22 pour y éviter tout dépôt de poussière, particule, ou même vapeur, fumée ou humidité.

Lorsque l'appareil est rendu opératif par actionnement soit de son interrupteur général 60 (figure 7) soit du mécanisme de transfert 61 suite à l'introduction d'une cassette, la glissière 4 est, d'une manière non représentée car bien connue, translatée (flèche F - figure 3). Dès lors, les tétons 12, 13 parcourent les fentes 11 libérant la coulisse 10 à l'action du ressort 17 qui l'entraîne dans le même sens et aboutissent à l'extrémité droite desdites fentes 11. Ainsi, l'obturateur 16 est dégagé de l'élément actif 22 de la tête 20, amené et maintenu dans la position stable représentée à la figure 1; une butée 19 fixée au montant 2 en limitant le déplacement vers la droite. L'élément actif 22 étant exposé, la tête 20 est déplacée (flèche H - figure 2) pour être appliquée sur le support d'informations.

Lorsque l'appareil est commuté en mode inopératif par actionnement de l'interrupteur 60 ou du mécanisme de transfert 61, la tête 20 est dégagée du support d'informations, simultanément la glissière 4 est déplacée en sens inverse (flèche G - figure 1), ainsi les tétons 12, 13 parviennent à l'extrémité gauche des fentes 11 puis déplacent la coulisse 10 qui ramène l'obturateur 16 contre l'élément actif 22 (figure 3) et l'y maintient grâce à la lamelle flexible 18.

L'élément actif 22 est donc protégé en permanence de tout dépôt, contamination par soit le support d'informations en mode de lecture et/ou d'enregistrement, soit l'obturateur 16 dans tout autre mode. L'obturateur 16 muni d'une matière appropriée, en étant translaté sur l'élément actif 22, peut avantageusement assurer son nettoyage.

Les figures 4 à 7 couvrent une réalisation propre à un lecteur de disque optique du type portatif dont la source d'énergie doit être impérativement épargnée. Un obturateur 52 vient également recouvrir, découvrir l'élément actif 30, une lentille par laquelle passe le faisceau lumineux du dispositif de lecture et/ou d'enregistrement 31 qui est un laser.

Le dispositif 31 est mobile pour assurer le suivi des informations et porte une bobine 32 reliée à deux plaques en fer doux 33, 34 entourant un rotor 36 aimanté en permanence Nord, Sud sur chaque demi-lune (figures 5A, 6A) et muni d'un doigt 38 excentré qui agit grâce à une fente 50 (Fig. 5) sur l'obturateur 52 pour le faire pivoter autour de l'axe 54. L'ensemble bobine 32, plaques 33, 34 et rotor 36 constitue un micro-moteur pas-à-pas activé par une brève impulsion de courant ce qui ne nécessite qu'une infime dépense d'énergie et assure aux plaques 33, 34 des polarités toujours opposées (figures 5A, 6A). En l'absence d'impulsion, le fer doux des plaques 33, 34 assure la rémanence de leurs polarités, ce qui contrecarre toute rotation éventuelle du rotor 36 suite à des chocs ou vibrations et lui confère donc deux positions excessivement stables où la lentille 30 est découverte, respectivement recouverte (figures 5, 6).

Pour déplacer l'obturateur 52, la bobine 32 est avantageusement alimentée par une brève impulsion électrique (200 ms) de faible tension (3V.) dont le sens détermine celui du courant la parcourant, donc la polarité des plaques 33, 34. Dans un mode de réalisation préféré, on utilise l'impulsion du circuit 62 (figure 7) assurant la mise sous tension, hors tension du dispositif de lecture, enregistrement 31 qui est positive, respectivement négative car chacune commute les polarités des plaques 33, 34, ce qui fait tourner le rotor 36 (flèche R) à chaque fois d'un demi tour. Le doigt 38 peut donc passer à tout moment, pour une impulsion positive, de la position de la figure 6A à celle de la figure 5A et par la fente 50, pivoter l'obturateur 52 qui découvre la lentille 30 (figure 5) et reste dans cette position stable. La lecture et/ou l'enregistrement d'informations peut avoir lieu.

Pour recouvrir la lentille 30 à tout moment, il suffit d'utiliser l'impulsion négative assurant la mise hors tension du dispositif 31; le courant circule dans la bobine 32 en sens opposé, créant sur les plaques 33, 34 des polarités opposées aux précédentes (figure 6A) qui font pivoter le rotor 36 et son doigt 38 d'un demi tour amenant l'obturateur 52 dans la position stable de la figure 6.

La brièveté de l'impulsion ne nécessite nullement une source de courant permanent, donc ce moyen de protection peut être monté dans tout appareil pour véhicule ; en outre, une très faible énergie est requise, ce qui permet de l'intégrer à tout appareil portatif.

Comme montré aux figures 5A, 6A, chaque plaque 33, 34 possède avantageusement à proximité du rotor 36 une légère discontinuité 39 pour concentrer le passage du flux magnétique, empruntant toujours le chemin le plus court, sur le secteur 40 et donc stopper le rotor 36 dans une position où le diamètre séparant ses pôles Nord et Sud est décalé de l'axe de la fente séparant les plaques 33, 34. Ainsi, le rotor 36 tourne toujours lors de l'inversion des polarités.

Les champs magnétiques mis en oeuvre sont très faibles et les polarités des plaques 33, 34 et du rotor 36 étant opposées et très proches, il n'y a aucune perte magnétique.

De plus, ce moyen de protection est d'une sécurité totale, il est inutile de mémoriser le sens de l'impulsion de commande ou la position de l'obturateur 52 en cas de panne ou changement d'alimentation car une impulsion positive fait toujours pivoter l'obturateur dans un sens (découvrir la lentille), une impulsion négative le fait toujours pivoter dans l'autre sens (recouvrir la lentille). Les impulsions de commande étant générées par la mise sous tension ou hors tension du dispositif de lecture et/ou d'enregistrement 31, la lentille 30 n'est découverte qu'en mode de lecture et/ou d'enregistrement, obturée dans tout autre mode. Ce mode de réalisation peut être appliqué à toute tête autre qu'optique. Il est aussi possible d'utiliser les impulsions générées par l'interrupteur 60 ou le mécanisme de transfert 61, lorsqu'il existe.

A la place d'un rotor aimanté 36, on peut appliquer sur la face inférieure de l'obturateur 52 proche des plaques 33, 34, une matière magnétique telle qu'employée dans les afficheurs Signalex, l'obturateur étant alors attiré par un pôle magnétique, repoussé par l'autre, tandis que l'inversion de polarité des plaques 33, 34 assure son pivotement.
- 2: montant
- 3: fente en L
- 4: glissière
- 6: téton
- 7: fente inclinée
- 10: coulisse
- 11: fentes de 10
- 12, 13: tétons
- 14: pli
- 16: obturateur
- 17: ressort de traction
- 18: lamelle flexible
- 19: butée
- 20: tête magnétique
- 22: élément actif de 20
- 30: élément actif de 31, lentille
- 31: dispositif de lecture/enregistrement
- 32: bobines
- 33, 34: plaques
- 36: rotor aimanté
- 38: doigt
- 39: discontinuité
- 40: secteur
- 50: fente
- 52: obturateur
- 54: axe
- 60: interrupteur Marche/arrêt
- 61: mécanisme de transfert
- 62: circuit

## Revendications

1. Moyens de protection pour dispositif de lecture et/ou d'enregistrement (30) coopérant avec un support d'informations et actionné par un interrupteur (60) ou le circuit (62) d'alimentation du dispositif de lecture, lesdits moyens comportant un obturateur (52) **caractérisés en ce que** ledit obturateur (52) est déplaçable entre deux positions où il recouvre, respectivement découvre le dispositif de lecture et/ou d'enregistrement (30), ledit obturateur (52) étant associé à un élément de commande (32, 33, 34), ledit obturateur (52) et ledit élément de commande (32, 33, 34) sont montés sur le dispositif de lecture (30) et l'élément de commande (32, 33, 34) rend les deux positions de l'obturateur (52) stables pour que toute impulsion du circuit (62) ou de l'interrupteur (60) assure instantanément et à tout moment le passage de l'obturateur (52) de l'une de ses positions stables à l'autre.

2. Moyens selon la revendication 1, **caractérisés en ce que** l'élément de commande (32, 33, 34) comprend deux plaques (33, 34) constituant une armature magnétisable dont les polarités sont commandées par impulsion électrique positive ou négative.

3. Moyens selon la revendication 2, **caractérisés en ce que** les plaques magnétisables (33, 34) sont reliées à une bobine (32) alimentée par l'interrupteur (60) ou le circuit (62) d'alimentation.

4. Moyens selon la revendication 2, **caractérisés en ce que** les plaques (33, 34) entourent un rotor (36) muni de moyens (38) actionnant l'obturateur (52).

5. Moyens selon la revendication 2, **caractérisés en ce que** chaque polarisation magnétique de plaques (33, 34) assure une position stable du rotor (36).

6. Moyens selon la revendication 2, **caractérisés en ce que** chaque plaque (33, 34) est en fer doux pour assurer la rémanence de sa polarisation magnétique et maintenir l'obturateur (52) dans chacune de ses positions stables.

## Claims

1. Protecting means for reading and/or recording device (30) cooperating with an information support and actuated by a switch (60) or the power circuit (62) of the reading device, said means comprising a shutter (52) **characterised in that** said shutter (52) is movable in-between two positions where it covers, respectively uncovers the reading and/or recording device (30), said shutter (52) being associated to a control element (32, 33, 34), said shutter (52) and said control element (32, 33, 34) are mounted on the reading device (30) and the control element (32, 33, 34) make the two positions of the shutter (52) stable ones in order that any pulse from the circuit (62) or the switch (60) instantaneously and at any moment ensures the switching of the shutter (52) from one of its stable positions to the other one.

2. Means according to claim 1, **characterised in that** the control element (32, 33, 34) comprises two plates (33, 34) constituting an magnetizable armature, the polarities of which are powered by an electric positive or negative pulse.

3. Means according to claim 2, **characterized in that** the magnetizable plates (33, 34) are connected to a coil (32) powered by the switch (60) or the power circuit (62).

4. Means according to claim 2, **characterized in that**, the plates (33, 34) enclose a rotor (36) provided with means (38) actuating the shutter (52).

5. Means according to claim 2, **characterized in that** each magnetic polarisation of plates (33, 34) ensures a stable position of the rotor (36).

6. Means according to claim 2, **characterized in that** each plate (33, 34) is made of soft iron to ensure the residual magnetism of its magnetic polarisation and keep the shutter (52) in each one of its stable positions.

## Patentansprüche

1. Schutzmittel für eine mit einem Datenträger zusammenwirkende Lese- und/oder Speichervorrichtung (30), das durch einen Schalter (60) oder die Versorgungsschaltung (62) der Lesevorrichtung betätigt wird, wobei die Mittel einen Verschluss (52) umfassen, **dadurch gekennzeichnet,**
**dass** der Verschluss (52) zwischen zwei Positionen umstellbar ist, in denen er die Lese- und/oder Speichervorrichtung (30) abdeckt oder freigibt, wobei der Verschluss (52) einem Steuerelement (32, 33, 34) zugeordnet ist,
**dass** der Verschluss (52) und das Steuerelement (32, 33, 34) an der Lesevorrichtung (30) angeordnet sind und
**dass** das Steuerelement (32, 33, 34) zu zwei stabilen Positionen des Verschlusses (52) führt, so dass jeder Impuls der Schaltung (62) oder des Schalters (60) die Umstellung des Verschlusses (52) von der einen seiner stabilen Positionen zur anderen sofort und jederzeit gewährleistet.

2. Mittel nach Anspruch 1, **dadurch gekennzeichnet, dass** das Steuerelement (32, 33, 34) zwei Platten (33, 34) umfasst, welche eine magnetisierbare Armatur bilden, deren Polaritäten durch positive oder negative elektrische Impulse gesteuert sind.

3. Mittel nach Anspruch 2, **dadurch gekennzeichnet, dass** die magnetisierbaren Platten (33, 34) mit einer Spule (32) verbunden sind, welche über den Schalter (60) oder die Versorgungsschaltung (62) versorgt ist.

4. Mittel nach Anspruch 2, **dadurch gekennzeichnet, dass** die Platten (33, 34) einen Rotor (36) umgeben, welcher mit Mitteln (38) ausgerüstet ist, die den Verschluss (52) betätigen.

5. Mittel nach Anspruch 2, **dadurch gekennzeichnet, dass** jede magnetische Polarisierung der Platten (33, 34) eine stabile Position des Rotors (36) gewährleistet.

6. Mittel nach Anspruch 2, **dadurch gekennzeichnet, dass** jede Platte (33, 34) aus Weicheisen ist, um die Remanenz ihrer magnetischen Polarisierung zu gewährleisten und den Verschluss (52) in jeder seiner stabilen Positionen zu halten.
